# EUROPÄISCHE PATENTSCHRIFT

(11) **EP 4 450 450 B1**
(45) Veröffentlichungstag und Bekanntmachung des Hinweises auf die Patenterteilung: **12.08.2026**
(21) Anmeldenummer: 24168411.7
(22) Anmeldetag: 04.04.2024
(51) Int. Cl.: B66F 9/075, G01D 11/24, G01P 1/02, G10K 11/00, H05K 5/02, H05K 7/14

(54) **MODUL**
MODULE
MODULE

(30) Priorität: 14.04.2023 DE 102023109415
(43) Veröffentlichungstag der Anmeldung: 23.10.2024
(73) Patentinhaber: Vetter Industrie GmbH, 57299 Burbach (DE)
(72) Erfinder: Vetter, Arnold, 57234 Wilnsdorf (DE); Weyl, Tobias, 57290 Neunkirchen (DE); Vogt, Carsten, 57290 Neunkirchen (DE)
(74) Vertreter: Klüppel, Walter

(56) Entgegenhaltungen:
- EP-B1- 0 714 809
- WO-A1-2017/087109
- DE-A1- 102005 016 276
- JP-A- H05 205 502
- US-A- 3 854 820
- US-A1- 2002 085 385

## Beschreibung

Die Erfindung betrifft ein Modul mit einem Gehäuse zur Befestigung insbesondere an einem Gabelträger für Gabelzinken eines Flurförderfahrzeugs. Darüber hinaus betrifft die Erfindung einen Gabelträger mit dem Modul, ein Flurförderfahrzeug mit dem Gabelträger sowie ein Verfahren zum Ausrichten einer Halteeinrichtung innerhalb des Gehäuses des Moduls.

Ein derartiges Modul, auch vorgesehen zur Befestigung an einem Gabelträger an einem Flurförderfahrzeug ist im Stand der Technik grundsätzlich bekannt, z. B. aus der deutschen Offenlegungsschrift DE 10 2019 118 756 A1. Innerhalb des dort offenbarten Gehäuses ist eine Halteeinrichtung in Form eines Schlittens angeordnet zum Halten von mindestens einer Funktionseinheit in Form eines Sensors. Bei dem bekannten Sensor kann es sich beispielsweise um einen Radarsensor oder um eine Kamera oder einen Ultraschallsensor handeln. Der Sensor ist mit Hilfe des Schlittens in vertikaler Richtung verfahrbar bzw. einstellbar. Darüber hinaus kann der Sensor gegenüber der Horizontalen geneigt und/oder eine Rotationsachse gedreht werden. Der Sensor dient zur Überwachung eines Bereiches vor den Lastgabeln eines Flurförderfahrzeugs, insbesondere eines Gabelstaplers.

Die europäische Patentschrift EP 0 714 809 B1 offenbart einen Scheinwerfer für Fahrzeuge mit einem Scheinwerfereinsatz, der zumindest einen Reflektor umfasst und der an einer Aufnahme schwenkbar gehalten ist, und mit einer Verstellvorrichtung, durch die der Scheinwerfereinsatz zur Einstellung der Ausrichtung seiner optischen Achse schwenkbar ist, wobei die Verstellvorrichtung eine Verstellschraube umfasst, die durch eine Öffnung in einem Teil der Aufnahme hindurchtritt. Diese Öffnung ist in senkrechter Richtung langgestreckt ausgebildet.

Die japanische Patentanmeldung JPH05205502 offenbart einen zusätzlichen Reflektor, der an seinem oberen Ende mit Hilfe eines elastischen Teils an einem feststehenden Reflektor montiert ist und der in seinem unteren Bereich mit Hilfe einer Justierschraube an dem Reflektor montiert ist. Der Abstand zwischen Reflektor und dem zusätzlichen Reflektor kann mit Hilfe der Justierschraube variabel eingestellt werden. Das elastische Teil ragt im entspannten Zustand unter ein Basisniveau der Halteeinrichtung hinaus.

Die internationale Patenanmeldung WO 2017/087109 A1 offenbart ein Flurförderfahrzeug mit einem Linienlaser, der einen eigenen Akku besitzt, und der einen Gabelträger besitzt, auf dem ein Modul horizontal verschiebbar und arretierbar ist. An dem Gabelträger sind Gabelzinken angebracht.

Schließlich offenbart die amerikanische Patentanmeldung US 2002/0085385 A1 ein Modul gemäß dem Oberbegriff des Patentanspruchs 1.

Der Erfindung liegt die Aufgabe zugrunde, bei dem bekannten Modul, dem bekannten Gabelträger, dem bekannten Flurförderfahrzeug sowie dem bekannten Verfahren zum Ausrichten der Halteeinrichtung eine alterative Ausgestaltung für die Halteeinrichtung, auch in Verbindung mit dem Gehäuse vorzuschlagen zur Realisierung verschiedener Freiheitsgrade.

Diese Aufgabe wird bezüglich des Moduls durch den Gegenstand des Patentanspruchs 1 gelöst.

Die beanspruchten Justierschrauben sind erfindungsgemäß in dem Zwischenraum zwischen der Halteeinrichtung und der Rückwand des Gehäuses vorgesehen und definieren so den punktuellen Abstand des Halteeinrichtung zu der Rückwand des Gehäuses. Anders ausgedrückt: Über die Justierschrauben stützt sich die Halteeinrichtung von innen gegen die Rückwand des Gehäuses punktuell ab; damit drücken die Justierschrauben punktuell gegen die Rückwand bzw. stützen sich selber gegen die Rückwand des Gehäuses ab. Indem die Justierschrauben mehr oder weniger stark in eine zugehörige Gewindebohrung in die Halteeinrichtung eingeschraubt werden, ist der punktuelle Abstand der Halteeinrichtung zu der Rückwand des Gehäuses vorteilhafterweise variabel einstellbar. Je nachdem wo die mindestens eine Justierschraube an der Halteeinrichtung vorgesehen ist, ist es möglich, durch Variation des besagten punktuellen Abstandes den Neigungswinkel der Halteeinrichtung gegenüber der Rückwand des Gehäuses bzw. gegenüber der Horizontalen als einem ersten Freiheitsgrad und/oder den Drehwinkel der Halteeinrichtung um eine Drehachse, bei der vorliegenden Erfindung vorzugsweise um die vertikale y-Achse als einem zweiten Freiheitsgrad vorteilhafterweise variabel einzustellen.

Die mindestens eine Bohrung zur Durchführung der Befestigungsschraube ist als Langloch ausgebildet, vorzugsweise ausgerichtet in vertikaler Richtung. Dies hat den Vorteil, dass die Befestigungsschrauben zusammen mit der Halteeinrichtung in dem mindestens einen Langloch verschiebbar und arretierbar sind (dritter Freiheitsgrad).

Der Kopf der Justierschraube ist breiter als die lichte Breite des Langlochs und die besagte mindestens eine Gewindebohrung für die mindestens eine Justierschraube an der Halteeinrichtung ist derart neben einer Gewindebohrung für die Befestigungsschraube angebracht, dass sich die Justierschraube, eingeschraubt in ihre Gewindebohrung, über dem Langloch an der Rückwand des Gehäuses abstützt, wenn die Befestigungsschraube - durch das Langloch geführt - in ihre Gewindebohrung eingeschraubt ist. Diese Konstruktion bietet den Vorteil, dass die Justierschraube von außerhalb des Gehäuses verdrehbar ist, weil ein Schraubendreher zum Verdrehen der Justierschraube durch das Langloch hindurch auf die Justierschraube zugreifen kann. Dies ist besonders praktisch, denn der Abstand, der Neigungswinkel und/oder die Verdrehposition der Halteeinrichtung in Bezug auf das Gehäuse, insbesondere die Gehäuserückwand, können erfindungsgemäß aufgrund der besagten Konstruktion von außerhalb des Gehäuses variabel eingestellt werden.

Gemäß einem ersten Ausführungsbeispiel weist die Halteeinrichtung einen Aufnahmeraum auf zur Aufnahme der Funktionseinheit, wobei der Rand oder die Wandung des Aufnahmeraumes als Teil der Halteeinrichtung aus einem elastischen Material, vorzugsweise mit einer Kompressionsfuge gefertigt ist zum Einspannen der Funktionseinheit in einer gewünschten Drehwinkelposition um die z-Achse in dem Aufnahmeraum bei Einwirkung einer Kraft auf den Rand oder die Wandung des Aufnahmeraumes.

Gemäß einem weiteren Ausführungsbeispiel ist der elastische Rand oder die elastische Wandung des Aufnahmeraumes so konstruiert, dass sie im entspannten Zustand der Halteeinrichtung unter ein Basisniveau der Halteeinrichtung hinausragt. Dies hat den Vorteil, dass wenn die Befestigungsschrauben angezogen und so die Halteeinrichtung gegen die Rückwand des Gehäuses gedrückt wird, gleichzeitig auch eine Kraft auf den Rand oder die Wandung des Aufnahmeraumes ausgeübt wird, so dass die Funktionseinheit in dem Aufnahmeraum eingespannt wird.

Gemäß einem weiteren Ausführungsbeispiel kann in der Rückwand des Gehäuses eine Mehrzahl der Bohrungen für die Befestigungsschrauben verteilt vorgesehen sein zum Positionieren der Halteeinrichtung an verschiedenen Orten bzw. Positionen innerhalb des Gehäuses.

Bei der Funktionseinheit handelt es sich vorzugsweise um eine optische Einrichtung, die über elektromagnetische Strahlung, insbesondere Licht, durch eine Öffnung in dem Gehäuse mit ihrer Umgebung und mit der Umgebung des Gehäuses kommuniziert. Bei der optische Funktionseinrichtung kann es sich beispielsweise handeln um eine Lichtquelle, insbesondere eine Laserlichtquelle zum Aussenden eines Lichtstrahls, um eine Kamera und/oder um einen Sensor, beispielsweise einen Bewegungssensor oder einen Abstandssensor. Der Funktionseinheit kann vorzugsweise ein Funkmodul zugeordnet sein mit einer Sende- und/oder Empfangseinheit für eine vorzugsweise bidirektionale Kommunikation, beispielsweise per Bluetooth, ZigBee oder WiFi.

Die Laserlichtquelle kann als Linienlaser oder als Kreuzlaser ausgebildet sein, jeweils erkennbar bei Projektion auf einen zu bewegenden Gegenstand. Je nach Anwendungsfall kann es sinnvoll sein, eine Linie oder ein Kreuz auf den Gegenstand zu projizieren.

In dem Gehäuse ist typischerweise eine Spannungsversorgungseinheit angeordnet zum Bereitstellen einer elektrischen Versorgungsspannung insbesondere für die Funktionseinheit. Die Spannungsquelle kann ausgebildet sein entweder in Form eines Akkumulators oder in Form eines Abgriffs für eine externe Spannungsversorgung, beispielsweise die Spannungsversorgung des Flurförderfahrzeugs.

Gemäß einem weiteren Ausführungsbeispiel ist die Halteeinrichtung zumindest im Bereich der Gewindebohrungen für die Befestigungsschrauben und/oder im Bereich der Gewindebohrungen für die Justierschrauben aus einem elastischen Material gefertigt. Dies bietet den Vorteil, dass mechanische Spannungen innerhalb der Halteeinrichtung vermieden werden, die ansonsten zwangsläufig auftreten würden, wenn die Halteeinrichtung mit Hilfe der Befestigungsschrauben gegen die Rückwand des Gehäuses verspannt wird, während sie gleichzeitig mit Hilfe der Justierschrauben bezüglich der oben beschriebenen Freiheitsgrade eingestellt wird.

Die oben genannte Aufgabe wird weiterhin gelöst durch einen Gabelträger für die Gabelzinken eines Flurförderfahrzeugs, wobei das erfindungsgemäße Modul an dem Gabelträger befestigt ist; durch ein Flurförderfahrzeug mit dem besagten Gabelträger sowie durch ein Verfahren zum Ausrichten der Halteeinrichtung an der Rückwand des Gehäuses in dem erfindungsgemäßen Modul. Die Vorteile dieser Lösungen entsprechen den oben mit Bezug auf das erfindungsgemäße Modul genannten Vorteilen.

Weitere vorteilhafte Ausgestaltungen des Moduls, des Gabelträgers, des Flurförderfahrzeugs sowie des Verfahrens sind Gegenstand der abhängigen Ansprüche.

Der Erfindung sind insgesamt 13 Figuren beigefügt, wobei
- Figur 1: das erfindungsgemäße Modul, befestigt an einem Gabelträger für Gabelzinken eines Flurförderfahrzeugs;
- Figur 2: eine Ansicht auf die Rückwand des erfindungsgemäßen Gehäuses von außen;
- Figur 3: einen Blick in das Innere des Gehäuses;
- Figur 4a, b: die erfindungsgemäße Halteeinrichtung in zwei unterschiedlichen perspektivischen Ansichten;
- Figur 5: einen Querschnitt durch die erfindungsgemäße Halteeinrichtung, von innen angeschraubt an die Rückwand des Gehäuses mit vollständig eingeschraubten Justierschrauben;
- Figur 6: Figur 5 analog, allerdings teilweise herausgeschraubten Justierschrauben;
- Figur 7a: einen Querschnitt durch die erfindungsgemäße Halteeinrichtung in entspanntem Zustand;
- Figur 7b: die erfindungsgemäße Halteeinrichtung in verspanntem Zustand verschraubt gegen die Rückwand des Gehäuses;
- Figur 8: ein Blick von außen auf die Rückwand des Gehäuses zur Veranschaulichung der variablen Verschiebbarkeit der Halteeinrichtung innerhalb des Gehäuses;
- Figur 9: eine Querschnittsdarstellung durch die Halteeinrichtung angeschraubt an die Rückwand des Gehäuses zur Veranschaulichung von deren vertikaler Verschiebbarkeit;
- Figur 10: einen Querschnitt durch die Halteeinrichtung, verschraubt an dem Gehäuse mit eingebauter Funktionseinheit;
- Figur 11: das erfindungsgemäße Modul montiert an einem Gabelträger in perspektivischer Ansicht;
- Figur 12: eine Draufsicht auf den Gabelträger mit Gabelzinken und dem Modul; und
- Figur 13: ein Flurförderfahrzeug mit dem Gabelträger an dem Gabelzinken und das Modul befestigt sind,
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

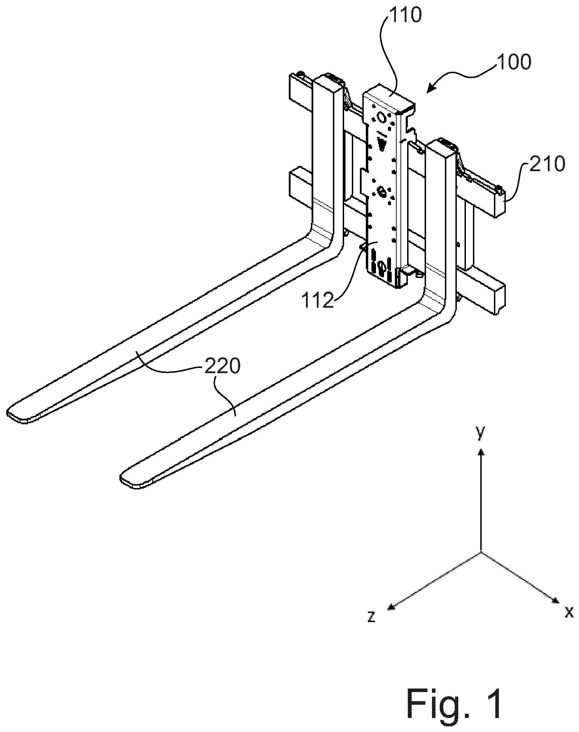

Figur 1 zeigt das erfindungsgemäße Modul 100 mit dem Gehäuse 110 mittig angebaut zwischen zwei Gabelzinken 220 an einem Gabelträger 210.

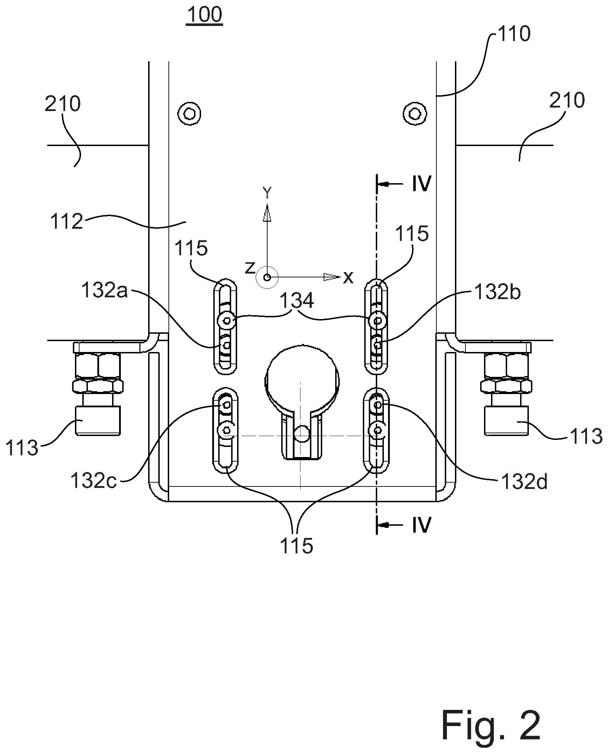

Figur 2 zeigt den unteren Bereich des Gehäuses 110 aus Figur 1 im Detail. Figur 2 zeigt den Blick von außen auf die Rückwand 112 des Gehäuses. Das Gehäuse 110 bzw. das Modul 100 ist mit Hilfe von Schrauben 113 hier beispielhaft von unten an den Gabelträger 210 angeschraubt. In der Rückwand 112 sind Bohrungen 115 in Form Langlöchern erkennbar zum Durchstecken von Befestigungsschrauben 134 zum Befestigen einer Halteeinrichtung im Inneren des Gehäuses. Die Halteeinrichtung dient zum Halten einer Funktionseinheit, die über eine Öffnung 118 in der Rückwand 112 des Gehäuses mit der Umgebung kommuniziert.

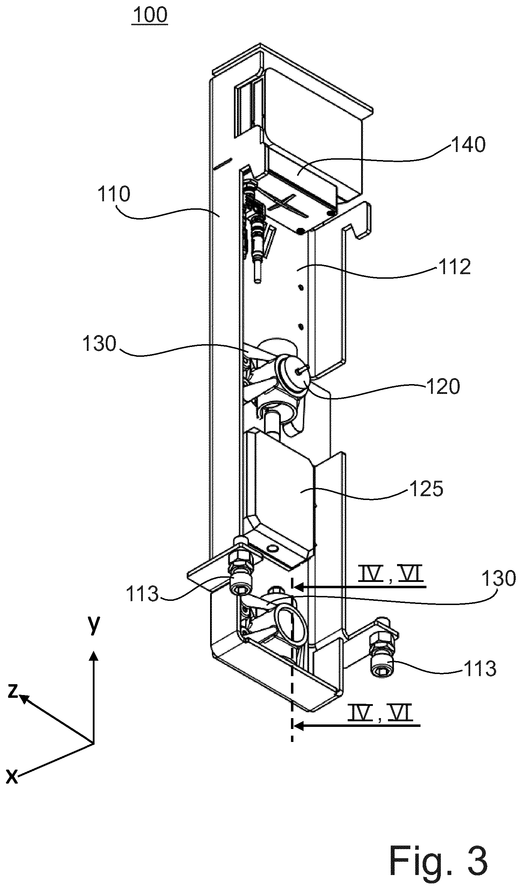

Figur 3 zeigt einen Blick in das Innere des geöffneten Gehäuses 110 mit der Rückwand 112. Es ist zu erkennen, dass eine Spannungsversorgungseinheit 140, zwei Halteeinrichtungen 130 und diverse Funktionseinheiten 120 im Inneren des Gehäuses angeordnet sind. Eine Funktionseinheit in Form einer Kamera oder einer Lasereinrichtung ist zu erkennen, wie sie von der mittleren Halteeinrichtung 130 getragen wird. Als weitere Funktionseinheit 120 ist weiterhin ein Funkmodul 125, typischerweise ausgerüstet mit einer Sende- und/oder Empfangseinheit für eine vorzugsweise bidirektionale Kommunikation, beispielsweise per Bluetooth, ZigBee oder WiFi zu erkennen. Das Funkmodul dient insbesondere dazu, Signale der Funktionseinheit in die Umwelt zu übertragen oder Informationen aus der Umgebung zu empfangen.

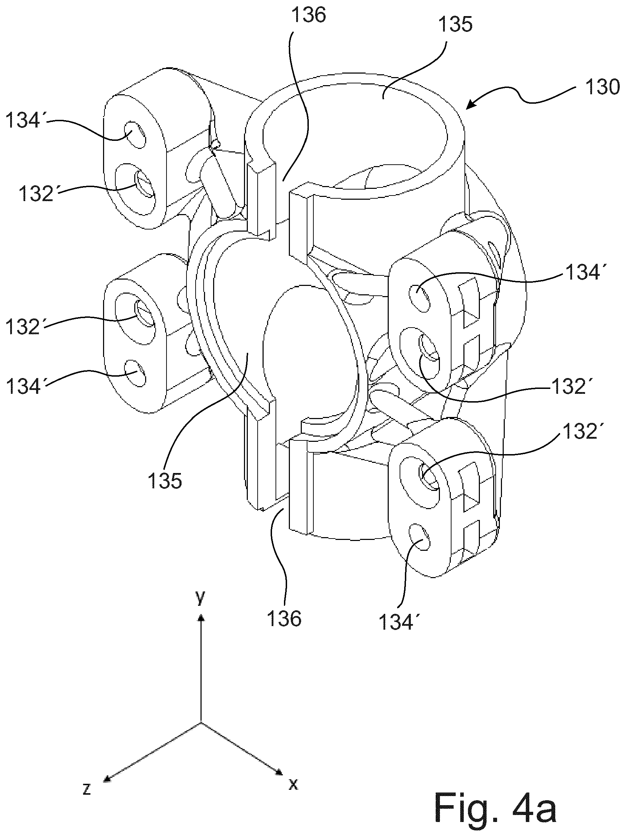

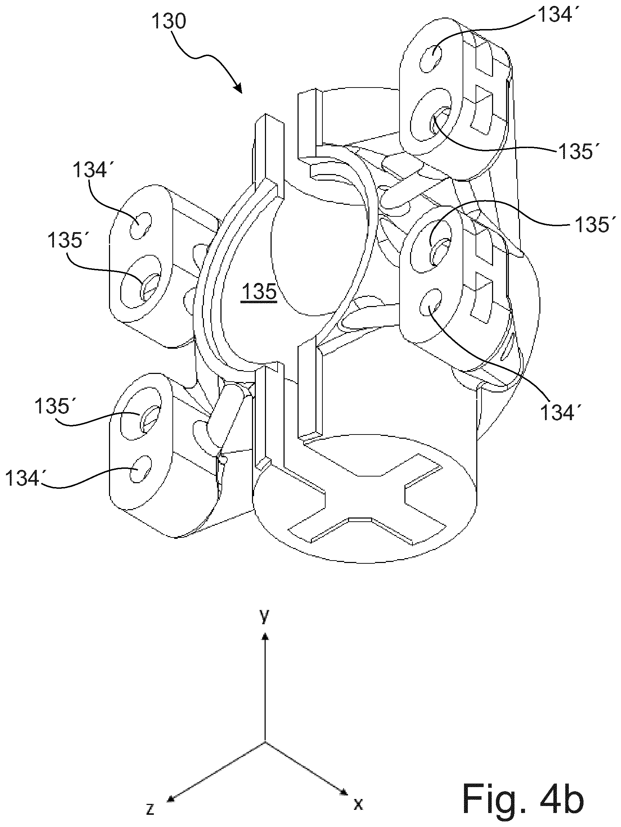

Figuren 4a und 4b zeigen die erfindungsgemäße Halteeinrichtung 130 in unterschiedlicher perspektivischer Ansicht. Es ist ein Aufnahmeraum 135 zu erkennen zur Aufnahme und Halterung der Funktionseinheit 120. Darüber hinaus sind Gewindebohrungen 132', 134' zu erkennen, einerseits für die Befestigungsschrauben 134 sowie andererseits für Justierschrauben 132.

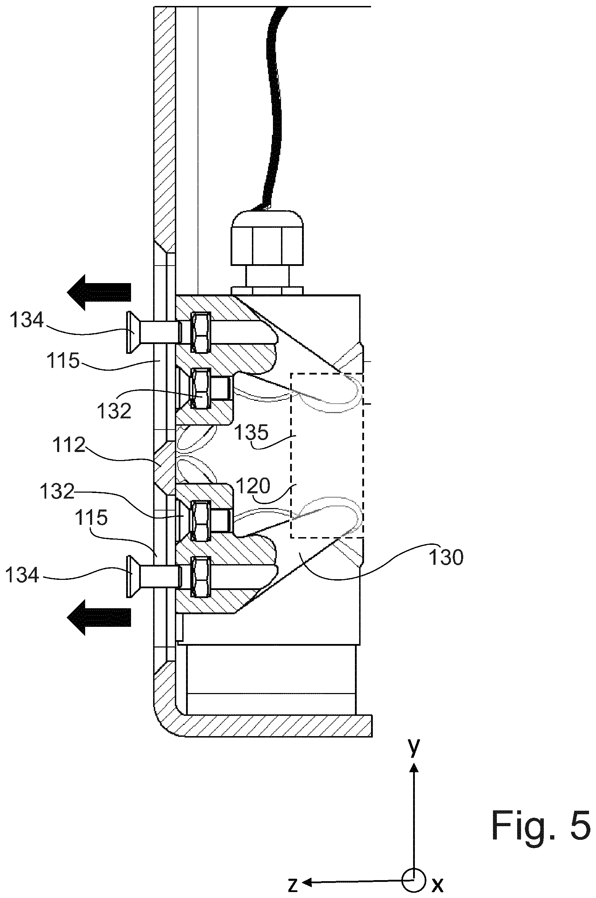

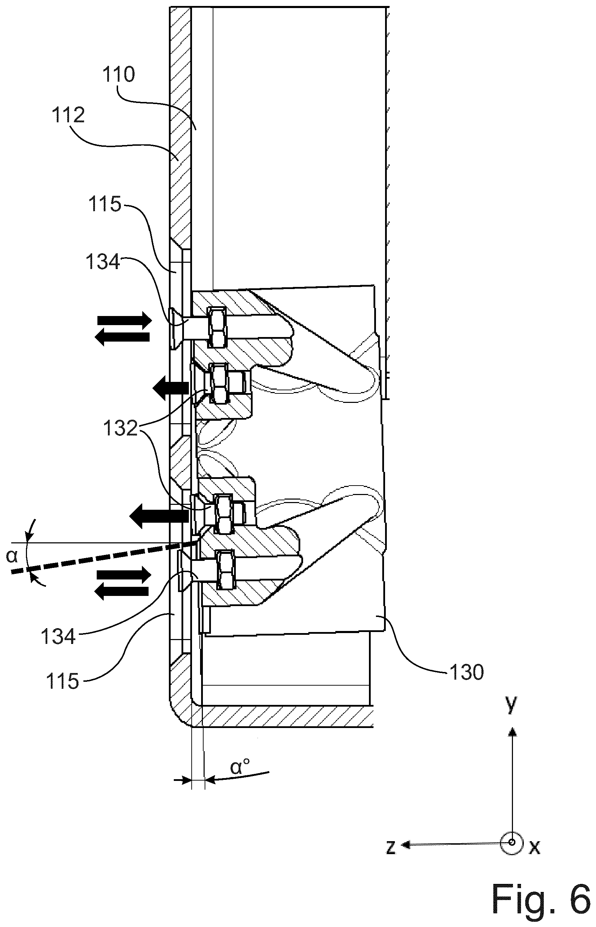

Die Figuren 5 und 6 zeigen die Montage der Halteeinrichtung 130 von innen an der Rückwand 112 des Gehäuses 110 befestigt ist, im Detail. Die Halteeinrichtung 130 wird mit Hilfe der mindestens einen Befestigungsschraube 134, die von außen durch die Bohrung 115 geführt ist, im Inneren des Gehäuses 110 an dessen Rückwand 112 fest verschraubt. Über die Justierschrauben 132, die an der Rückwand 112 des Gehäuses zugewandten Seite der Halteeinrichtung angeordnet sind, stützt sich die Halteeinrichtung gegen die Rückwand 112 des Gehäuses ab. Das gilt insbesondere dann, wenn die Halteeinrichtung 130 mit den Befestigungsschrauben 134 an die Rückwand 112 des Gehäuses 110 angeschraubt ist.

Figur 5 zeigt die Verschraubung der Halteeinrichtung 130 gegen die Rückwand 112 ohne eingestellten Neigungswinkel α.

Aufgrund der insbesondere in den Figuren 5 und 6 veranschaulichten erfindungsgemäßen Konstruktion ist es möglich, den Neigungswinkel α der Halteeinrichtung 130 und damit der darin lösbar, aber fest gelagerten Funktionseinheit 120 gegenüber der Horizontalen variabel einzustellen und gegebenenfalls zu arretieren. Dazu sind die folgenden Schritte durchzuführen:
- Lockern der Befestigungsschrauben 134 und damit der Halteeinrichtung 130 - mit oder ohne der Funktionseinheit 120 - von der Rückwand 112 des Gehäuses 110;
- Verdrehen von mindestens einer der Justierschrauben 132 so, dass die Halteeinrichtung entsprechend dem gewünschten Neigungswinkel α und/oder Drehwinkel β gegenüber der Rückwand 112 des Gehäuses 110 geneigt wird; und
- Festziehen der Befestigungsschrauben 134 und damit Arretieren der Halteeinrichtung 130 in der geneigten und/oder gedrehten Position gegenüber der Rückwand 112.

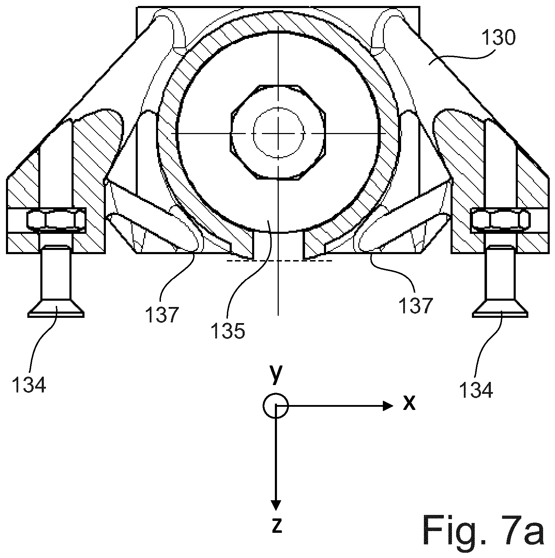

Figur 7a zeigt einen Blick von oben auf einen horizontalen Querschnitt durch die erfindungsgemäße Halteeinrichtung 130. Zu erkennen ist, dass die Halteeinrichtung 130 einen sich in y-Richtung erstreckenden Aufnahmeraum 135 aufweist zur Aufnahme der Funktionseinheit 120. Bei dem in Figur 7a gezeigten entspannten Zustand der Halteeinrichtung 130 ist zu erkennen, dass der elastisch ausgebildete Rand und/oder die elastisch ausgebildete Wandung des Aufnahmeraumes 135 unter ein Basisniveau 137 der Halteeinrichtung 130 hinausragt. Das Basisniveau 137 definiert die Auflagefläche der Halteeinrichtung 130 insbesondere gegen die Rückwand 112 des Gehäuses 110, sofern kein Neigungswinkel α eingestellt ist.

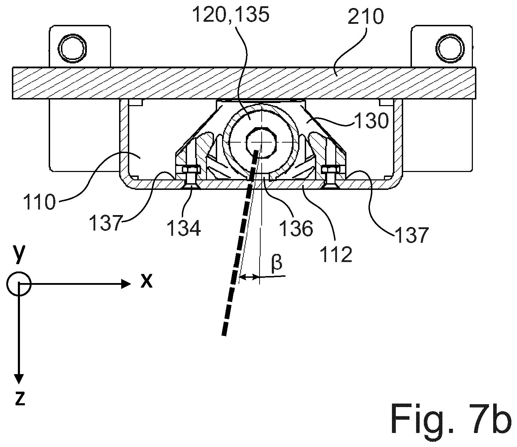

Figur 7b zeigt genau diese Situation. Es ist dann zu erkennen, dass der elastische Rand oder die elastische Wandung des Aufnahmeraumes 135 zumindest nicht mehr soweit über das Basisniveau 137 nach unten hinausragt, sondern dass der Rand bzw. die Wandung stattdessen aufgrund der durch die Befestigungsschrauben 134 aufgebrachten Zugkräfte gegen die Rückwand 112 des Gehäuses und damit auf Höhe des Basisniveaus gedrückt werden. Die Kompressionsfuge 136 wird dabei - sofern vorhanden - zumindest teilweise zusammengedrückt. Aufgrund dieser Krafteinwirkung auf den Rand bzw. die Wandung des Aufnahmeraumes 135 ist es möglich, die Funktionseinheit 120 in einer gewünschten Drehwinkelposition β um die y-Achse in dem Aufnahmeraum 135 verdrehsicher einzuspannen. Die dazu erforderlichen Verfahrensschritte lauten wie folgt:
- Lockern der Befestigungsschrauben und damit der Halteeinrichtung mit der Funktionseinrichtung 120 von der Rückwand 112, so dass sich der elastische Rand oder die elastische Wandung des Aufnahmeraumes 135 in entspanntem Zustand nach unterhalb des Basisniveaus 137 der Halteeinrichtung 130 erstreckt, wodurch der Aufnahmeraum 135 geweitet und die Funktionseinheit 120 in dem Aufnahmeraum bewegbar wird;
- Drehen der Funktionseinheit 120 in dem Aufnahmeraum 135 in die gewünschte Drehwinkelposition β um die y-Achse oder in die gewünschte Drehwinkelposition γ um die z-Achse; und
- Festziehen der Befestigungsschrauben und damit Drücken des Randes oder der Wandung des Aufnahmeraumes 135 unter Krafteinwirkung gegen die Rückwand 112, wodurch die Funktionseinheit 120 verdrehsicher in der gewünschten Drehwinkelposition β, γ in dem Aufnahmeraum der Halteeinrichtung eingespannt wird.

Alternativ kann der Drehwinkel β auch über eine entsprechende Einstellung der Justierschrauben 132 eingestellt werden, analog zu der Einstellung des Neigungswinkels α, wie oben beschrieben. Vorzugsweise ist die Halteeinrichtung 130 mit Hilfe einer Mehrzahl, vorzugsweise mit vier Befestigungsschrauben 134 an der Rückwand 112 des Gehäuses 110 befestigt. Zusätzlich ist ebenfalls eine Mehrzahl, vorzugsweise von vier Justierschrauben 132 an der Rückwand der Halteeinrichtung 130 befestigt, weiter vorzugsweise angeordnet in Form eines Rechteckes, wie in Figur 2 indirekt erkennbar. Je nachdem, welche der vier Justierschrauben in ihrer Einstellung verändert wird, kann entweder der Neigungswinkel α und/oder der Drehwinkel β eingestellt werden. Konkret sind beispielsweise zur Variation des Neigungswinkels α entweder die oberen Justierschrauben 132a und 132b oder die unteren Justierschrauben 132c und 132d jeweils als Paarung in ihrer Einstellung zu ändern. Zur Veränderung der Drehwinkelposition β sind dagegen die Paarungen der Justierschrauben 132b und 132d oder 132a und 132c in ihrer Einstellung paarweise zu verändern. Auch eine kombinierte Verstellung aller oder einzelner der Justierschrauben ist möglich; dann kann es zu einer Veränderung von sowohl dem Neigungswinkel wie auch der Drehwinkelposition β kommen.

Infolge einer Veränderung der Einstellung der Justierschrauben kann es passieren, dass die Andrückkraft von der Innenseite der Rückwand 112 des Gehäuses 110 gegen den Rand bzw. die Wandung des Aufnahmeraumes 135 zu gering wird, um die Funktionseinheit 120 in dem Aufnahmeraum 135 verdrehsicher zu verspannen. In diesem Fall ist es für die Anstellung der Drehwinkelposition β über die Justierschrauben erforderlich, dass die Funktionseinheit 120 auf andere Weise in dem Aufnahmeraum 135 verdrehsicher fixiert wird.

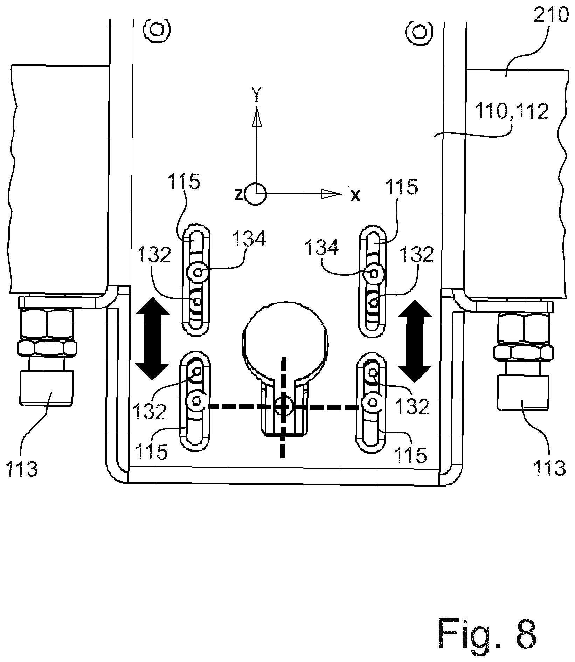

Figur 8 zeigt erneut einen Blick von außen auf die Rückseite 112 des Gehäuses 110 mit den Bohrungen 115 für die Befestigungsschrauben 134, ausgebildet in Form von sich in vertikaler Richtung y erstreckenden Langlöchern. Wie auch in den Figuren 5 und 6, so ist auch in Figur 8 zu erkennen, dass der Kopf der Justierschrauben 132 jeweils breiter ist als die lichte Breite des Langlochs. Die Gewindebohrung bzw. eine Mutter für die Justierschraube 132 ist in der Halteeinrichtung 130 derart neben einer Gewindebohrung, ebenfalls beispielhaft ausgebildet in Form einer Mutter, für die Befestigungsschraube angebracht, dass sich die Justierschraube - eingeschraubt in ihre Gewindebohrung - über dem Langloch 115 abstützt, wenn gleichzeitig die Befestigungsschraube 134 durch das Langloch geführt in ihre Gewindebohrung eingeschraubt ist. Dies ist in den Figuren 2 und 8 gezeigt. Dies hat den Vorteil, dass die Justierschrauben 132 von außen an dem Gehäuse, insbesondere, wenn dieses an dem Gabelträger 210 montiert ist, einstellbar sind zur Veränderung des Neigungswinkels α oder des Drehwinkels β, wie oben beschrieben.

Gleichzeitig bieten die Langlöcher 115 in Verbindung mit den Befestigungsschrauben 134 den Vorteil, dass die Halteeinrichtung 130 und damit auch die darin gelagerte Funktionseinheit in y-Richtung, d. h. in der Vertikalen verschiebbar und arretierbar sind. Dies erfolgt durch Ausführung der folgenden Schritte:
- Lockern der Befestigungsschrauben 134 und damit der Halteeinrichtung 130 von der Rückwand 112;
- Verschieben der Halteeinrichtung mit der oder ohne die Funktionseinrichtung 120 in Richtung der Längsausrichtung des Langlochs auf eine gewünschte Position, beispielsweise in vertikaler Richtung; und
- Festziehen der Befestigungsschrauben 134 und damit Arretieren der Halteeinrichtung 130 in der gewünschten Position an der Rückwand 112.

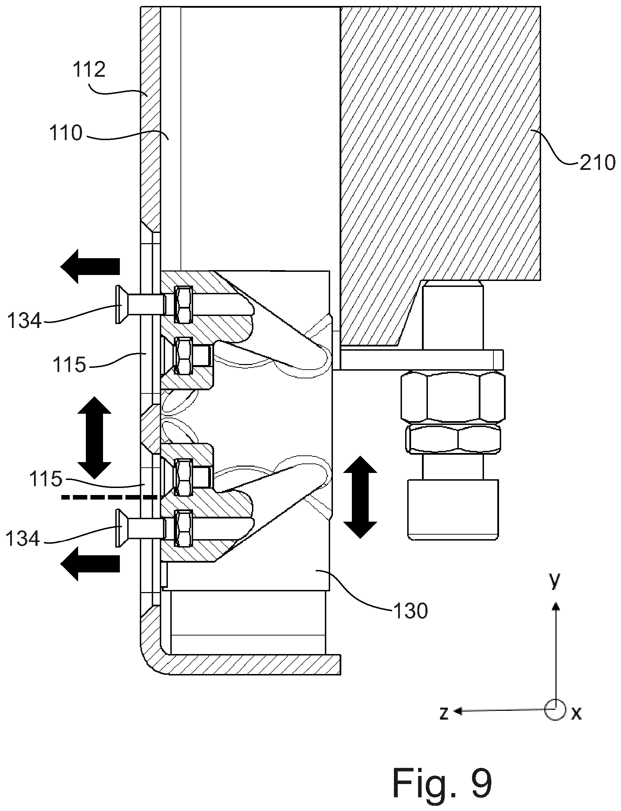

Figur 9 veranschaulicht dieses Verfahren im Detail durch die dickschwarz eingezeichneten Doppelpfeile.

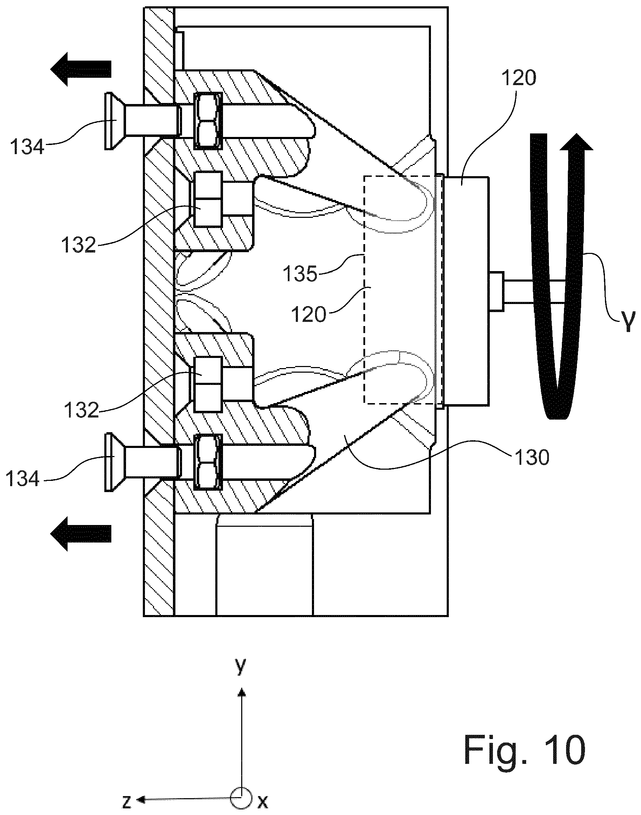

Der Aufnahmeraum 135 für die Funktionseinheit 120 kann nicht nur, wie zuvor beschrieben, in y-Richtung ausgerichtet sein, sondern auch, wie in Figur 10 gezeigt, in z-Richtung. Analog wie oben unter Bezugnahme auf die Figuren 7 und 8 beschrieben, kann somit die Funktionseinheit 120 auch in eine gewünschte Drehwinkelposition γ um die z-Achse gedreht und dort arretiert werden.

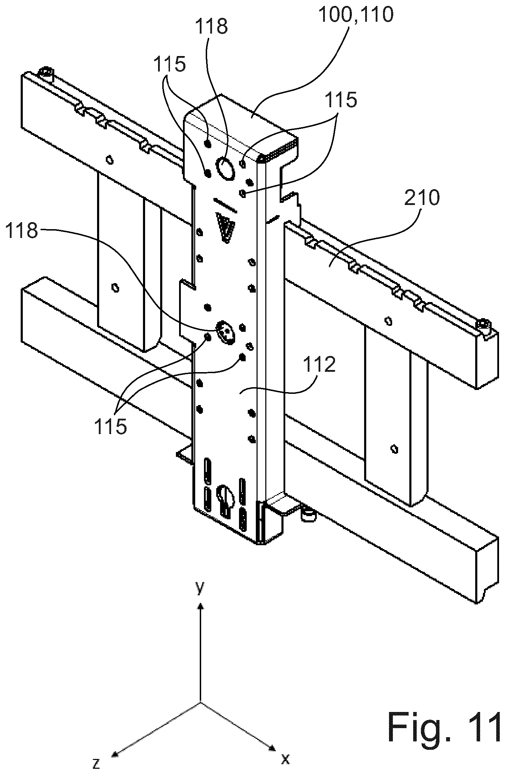

Figur 11 zeigt erneut das Modul und das Gehäuse 110 montiert an einem Gabelträger 210. Der hier gezeigte Blick von außen auf die Rückwand 112 des Gehäuses 110 lässt erkennen, dass die Bohrungen 115 für die Befestigungsschrauben 134 für die Halteeinrichtung 130 an verschiedenen Positionen an der Rückwand 112 verteilt angeordnet sein können, um die Halteeinrichtung 130 an diesen verschiedenen Positionen positionieren zu können. Im Bereich der Bohrungen 115 ist dann jeweils auch eine Öffnung 118 vorzusehen, durch die, wie gesagt, die Funktionseinheit 120 vom Inneren des Gehäuses (her) nach außen mit ihrer Umgebung kommuniziert.

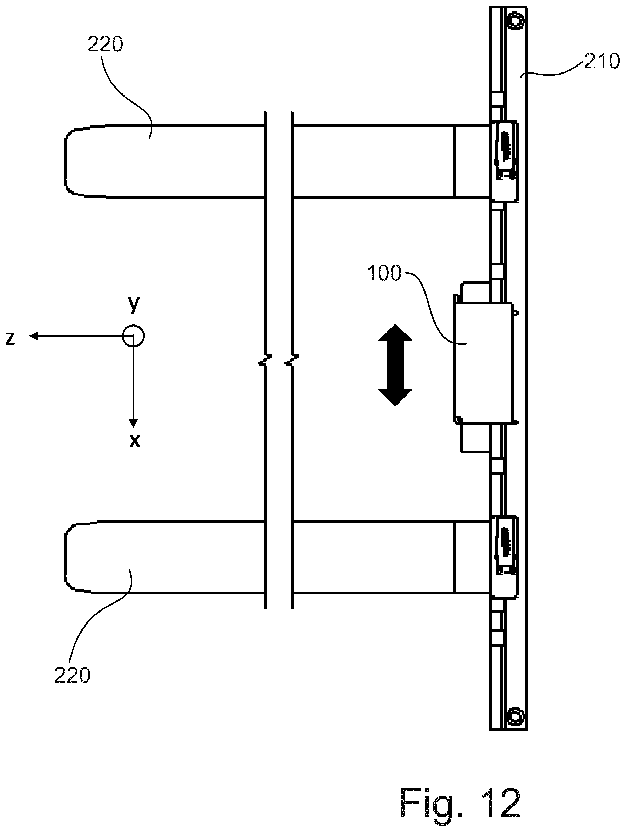

Figur 12 zeig eine Draufsicht von oben auf den Gabelträger 210 mit den anmontierten Gabelzinken 220 und dem vorzugsweise mittig zwischen den beiden Gabelzinken angebrachten Modul 100 bzw. Gehäuse 110. Der Doppelpfeil signalisiert, dass das Modul an dem Gabelträger 210 in horizontaler x-Richtung variabel positionierbar bzw. verschiebbar und arretierbar ist.

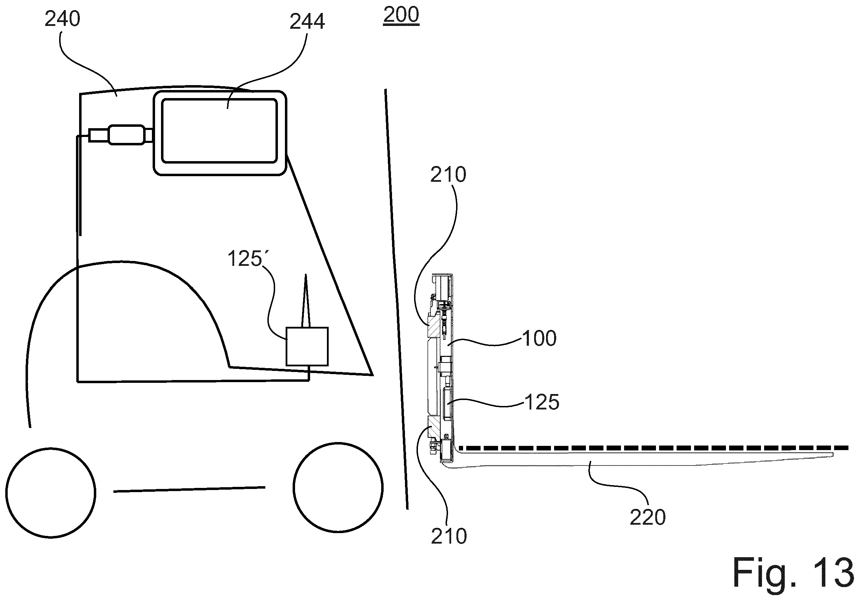

Figur 13 veranschaulicht schließlich das erfindungsgemäße Flurförderfahrzeug 200, insbesondere in Form eines Gabelstaplers. An dem Flurförderfahrzeug 200 ist der Gabelträger 210 mit dem anmontierten erfindungsgemäßen Modul 100 und mit Gabelzinken 220 gezeigt. Das Funkmodul 125 innerhalb des Moduls 100 kommuniziert mit einem Funkmodul 125' im Bereich des Führerstandes 240. Das Funkmodul 125' ist beispielsweise ausgebildet, die Signale der Kamera in dem Modul 100 an einen Monitor 244 der vorzugsweise in dem Führerstand 240 angeordnet ist, für die Bedienperson auszugeben.

### Bezugszeichenliste

- 100: Modul
- 110: Gehäuse
- 112: Rückwand
- 113: Schraube
- 115: Bohrungen, Langlöcher
- 118: Öffnung
- 120: Funktionseinheit
- 125: Funkmodul
- 125': Funkmodul
- 130: Halteeinrichtung
- 132: Justierschrauben
- 132a-d: Justierschrauben
- 132': Gewindebohrung Justierschrauben
- 134: Befestigungsschrauben
- 134': Gewindebohrung Befestigungsschrauben
- 135: Aufnahmeraum
- 136: Kompressionsfuge
- 137: Basisniveau
- 140: Spannungsversorgungseinheit
- 200: Flurförderfahrzeug
- 210: Gabelträger
- 220: Gabelzinken
- 240: Führerstand
- 244: Monitor

- α: Neigungswinkel
- β: Drehwinkel um y-Achse
- γ: Drehwinkel um z-Achse

## Patentansprüche

1. Modul (100) aufweisend:
ein Gehäuse (110) zur Befestigung insbesondere an einem Gabelträger (210) eines Flurförderfahrzeugs (200); und
mindestens eine innerhalb des Gehäuses (110) angeordnete Halteeinrichtung (130) zum Halten mindestens einer Funktionseinheit (120);
wobei in der Rückwand (112) des Gehäuses (110) eine Öffnung (118) vorgesehen ist, durch welche hindurch die Funktionseinheit mit der Umgebung kommuniziert;
wobei in der Rückwand (112) des Gehäuses (110) mindestens eine Bohrung (115) zur Durchführung mindestens einer Befestigungsschraube (134) vorgesehen ist;
wobei die Halteeinrichtung (130) mit Hilfe der mindestens einen Befestigungsschraube (134), die durch die Bohrung geführt ist, im Innern des Gehäuses an der Rückwand (112) festschraubbar ist; und
wobei in die Halteeinrichtung (130) an ihrer der Rückwand des Gehäuses zugewandten Seite mindestens eine Justierschraube (132) eingeschraubt ist, über die die Halteeinrichtung gegen die Rückwand (112) des Gehäuses abgestützt ist, wenn die Halteeinrichtung mit den Befestigungsschrauben an die Rückwand des Gehäuses angeschraubt ist;
**dadurch gekennzeichnet,**
**dass** die Bohrung (115) als Langloch ausgebildet ist, vorzugsweise ausgerichtet in vertikaler Richtung; und
**dass** der Kopf der Justierschraube (132) breiter ist als die lichte Breite des Langlochs; und
**dass** an der Halteeinrichtung (130) eine Gewindebohrung für die Justierschraube (132) derart neben einer Gewindebohrung für die Befestigungsschraube (134) angebracht ist, dass sich die Justierschraube - eingeschraubt in ihre Gewindebohrung - über dem Langloch (115) an der Rückwand des Gehäuses abstützt, wenn die Befestigungsschraube (134) - durch das Langloch geführt - in ihre Gewindebohrung eingeschraubt ist.

2. Modul (100) nach Anspruch 1,
**dadurch gekennzeichnet,**
**dass** die Halteeinrichtung (130) mit Hilfe von einer Mehrzahl, vorzugsweise mit vier Befestigungsschrauben (134) an der Rückwand (112) des Gehäuses (110) befestigt ist; und/oder
**dass** die Halteeinrichtung (130) mit Hilfe von einer Mehrzahl, vorzugsweise mit vier Justierschrauben (132) gegen die Rückwand (112) des Gehäuses (110) abgestützt ist.

3. Modul (100) nach einem der vorangegangenen Ansprüche,
**dadurch gekennzeichnet,**
**dass** die Halteeinrichtung (130) einen sich in y-Richtung erstreckenden Aufnahmeraum (135) aufweist zur Aufnahme der Funktionseinheit (120); und dass zumindest der Rand oder die Wandung des Aufnahmeraumes (135) als Teil der Halteeinrichtung aus einem elastischen Material, vorzugsweise mit einer Kompressionsfuge (136) gefertigt ist zum Einspannen der Funktionseinheit (120) in einer gewünschten Drehwinkelposition (β) um die y-Achse in dem Aufnahmeraum (135) bei Einwirkung einer Kraft auf den Rand oder die Wandung des Aufnahmeraumes; und/oder
**dass** die Halteeinrichtung (130) einen sich in z-Richtung erstreckenden Aufnahmeraum (135) aufweist zur Aufnahme der Funktionseinheit (120); und dass zumindest der Rand oder die Wandung des Aufnahmeraumes (135) als Teil der Halteeinrichtung aus einem elastischen Material, vorzugsweise mit einer Kompressionsfuge (136) gefertigt ist zum Einspannen der Funktionseinheit (120) in einer gewünschten Drehwinkelposition (γ) um die z-Achse in dem Aufnahmeraum (135) bei Einwirkung einer Kraft auf den Rand oder die Wandung des Aufnahmeraumes

4. Modul nach Anspruch 3,
**dadurch gekennzeichnet,**
**dass** der elastische Rand oder die elastische Wandung des Aufnahmeraumes (135) im entspannten Zustand der Halteeinrichtung unter ein Basisniveau (137) der Halteeinrichtung (130) hinausragt.

5. Modul (100) nach einem der vorangegangenen Ansprüche,
**dadurch gekennzeichnet,**
**dass** in der Rückwand (112) des Gehäuses (110) eine Mehrzahl der Bohrungen (115) für die Befestigungsschrauben (134) verteilt vorgesehen ist zum Positionieren der Halteeinrichtung an verschiedenen Orten innerhalb des Gehäuses.

6. Modul (100) nach einem der vorangegangenen Ansprüche,
**dadurch gekennzeichnet,**
**dass** es sich bei der Funktionseinheit (120) um eine optische Funktionseinrichtung handelt, die über elektromagnetische Strahlung, insbesondere Licht, durch eine Öffnung (118) in dem Gehäuse (110) mit der Umgebung des Gehäuses kommuniziert;
**dass** es sich bei der optischen Einrichtung beispielsweise handelt um eine Lichtquelle, insbesondere Laserlichtquelle zum Aussenden eines Lichtstrahls, eine Kamera, und/oder einen Sensor, beispielsweise einen Bewegungssensor oder einen Abstandssensor; und
**dass** der Funktionseinheit vorzugsweise ein Funkmodul (125, 125') zugeordnet ist mit einer Sende- und/oder Empfangseinheit für eine vorzugsweise bidirektionale Kommunikation, beispielsweise per Bluetooth, ZigBee oder WiFi, beispielsweise zwischen dem Modul und einem Führerstand (240) des Flurförderfahrzeugs (200).

7. Modul (100) nach Anspruch 6,
**dadurch gekennzeichnet,**
**dass** die Laserlichtquelle als Linienlaser ausgebildet ist zum Aussenden des Laserlichtes als vorzugsweise horizontale Linie, erkennbar bei Projektion auf einen Gegenstand; oder
**dass** die Laserlichtquelle als Kreuzlaser ausgebildet ist zum Aussenden des Laserlichtes als vorzugsweise horizontale Linie in Kombination mit einer dazu senkrechten Kreuzlinie, erkennbar bei Projektion auf einen Gegenstand.

8. Modul (100) nach einem der vorangegangenen Ansprüche,
**dadurch gekennzeichnet,**
**dass** in dem Gehäuse eine Spannungsversorgungseinheit (140) angeordnet ist zum Bereitstellen einer elektrischen Versorgungsspannung, insbesondere für die Funktionseinheit (130); und
**dass** die Spannungsversorgungseinheit (140) ausgebildet ist entweder in Form eines Akkumulators oder in Form eines Abgriffs für eine externe Versorgungsspannung, beispielsweise die Versorgungsspannung des Flurförderfahrzeugs.

9. Modul nach einem der vorangegangenen Ansprüche,
**dadurch gekennzeichnet,**
**dass** die Halteeinrichtung zumindest im Bereich der Gewindebohrungen für die Befestigungsschrauben (134) und/oder der Gewindebohrungen für die Justierschrauben (132) aus einem elastischen Material gefertigt ist.

10. Gabelträger (210) für Gabelzinken (220) eines Flurförderfahrzeugs (200), **gekennzeichnet durch**
ein an dem Gabelträger (210) befestigbares Modul (100) gemäß einem der vorangegangenen Ansprüche.

11. Gabelträger (210) nach Anspruch 10,
**dadurch gekennzeichnet,**
**dass** an dem Gabelträger (210) zwei Gabelzinken angebracht sind; und dass das Modul vorzugsweise mittig zwischen den beiden Gabelzinken (220) angeordnet ist.

12. Gabelträger (210) nach Anspruch 10 oder 11,
**dadurch gekennzeichnet,**
**dass** das Modul (100) an dem Gabelträger (210) horizontal in x-Richtung verschiebbar ist und arretierbar ist.

13. Flurförderfahrzeug (200), insbesondere Gabelstapler,
**gekennzeichnet durch**
einen Gabelträger (210) nach einem der Ansprüche 10 bis 12.

14. Flurförderfahrzeug (200) nach Anspruch 13,
**dadurch gekennzeichnet,**
**dass** das Flurförderfahrzeug (200) einen Führerstand (240) aufweist zum Führen des Flurförderfahrzeugs durch eine Bedienperson; und
**dass** in dem Führerstand (240) ein Monitor (244) vorhanden ist zum Anzeigen der von der Kamera (120) aufgenommen Bilder für die Bedienperson.

15. Verfahren zum Ausrichten der Halteeinrichtung (130) an der Rückwand (112) des Gehäuses (110) in einem Modul gemäß einem der Ansprüche 1 bis 9, wobei in der Rückwand (112) des Gehäuses (110) Bohrungen (115) zur Durchführung der Befestigungsschrauben (134) vorgesehen sind, wobei die die Halteeinrichtung (130) mit Hilfe der Befestigungsschrauben (134) an der Rückwand (112) festschraubbar ist, und wobei die Halteeinrichtung (130) mit mindestens einer Justierschraube (132) von Innen gegen die Rückwand abgestützt ist,
**gekennzeichnet durch** folgende Schritte zur Einstellung des Neigungswinkels (α) gegenüber der z-Achse und/oder des Drehwinkels (β) um die y-Achse:
Lockern der Befestigungsschrauben (134) und damit der Halteeinrichtung (130) - mit oder ohne der Funktionseinheit (120) - von der Rückwand (112) des Gehäuses (110);
Verdrehen von mindestens einer der Justierschrauben (132) so, dass die Halteeinrichtung entsprechend dem gewünschten Neigungswinkel (α) und/oder Drehwinkel (β) gegenüber der Rückwand (112) des Gehäuses (110) geneigt wird; und
Festziehen der Befestigungsschrauben (134) und damit Arretieren der Halteeinrichtung (130) in der geneigten und/oder gedrehten Position gegenüber der Rückwand (112).

16. Verfahren nach Anspruch 15,
**dadurch gekennzeichnet,**
**dass** das Verdrehen der Justierschrauben (132) mit Hilfe eines Schraubendrehers von außerhalb des Gehäuses (110) durch die Bohrungen (115) hindurch erfolgt.

17. Verfahren nach Anspruch 15 oder 16,
wobei die Halteeinrichtung (130) einen Aufnahmeraum (135) aufweist zur Aufnahme der Funktionseinheit (120), wobei zumindest der Rand oder die Wandung des Aufnahmeraumes (135) als Teil der Halteeinrichtung aus einem elastischen Material, vorzugsweise mit einer Kompressionsfuge (136) gefertigt ist zum Einspannen der Funktionseinheit (120) in einer gewünschten Drehwinkelposition (β) um die y-Achse in dem Aufnahmeraum (135), wenn sich dieser in y-Richtung erstreckt, oder in einer gewünschten Drehwinkelposition (γ), wenn sich der Aufnahmeraum (135) in z-Richtung erstreckt,
**gekennzeichnet durch** folgende Schritte:
- Lockern der Befestigungsschrauben und damit der Halteeinrichtung mit der Funktionseinrichtung (120) von der Rückwand (112), so dass sich der elastische Rand oder die elastische Wandung des Aufnahmeraumes (135) in entspanntem Zustand nach unterhalb des Basisniveaus (137) der Halteeinrichtung (130) erstreckt, wodurch der Aufnahmeraum (135) geweitet und die Funktionseinheit (120) in dem Aufnahmeraum bewegbar wird;
- Drehen der Funktionseinheit (120) in dem Aufnahmeraum (135) in die gewünschte Drehwinkelposition (β) um die y-Achse oder in die gewünschte Drehwinkelposition (γ) um die z-Achse; und
- Festziehen der Befestigungsschrauben und damit Drücken des Randes oder der Wandung des Aufnahmeraumes (135) unter Krafteinwirkung gegen die Rückwand (112), wodurch die Funktionseinheit (120) verdrehsicher in der gewünschten Drehwinkelposition (β, γ) in dem Aufnahmeraum der Halteeinrichtung eingespannt wird.

18. Verfahren nach einem der Ansprüche 15 bis 17,
**dadurch gekennzeichnet,**
**dass** die mindestens eine Bohrung (115) für die Befestigungsschrauben (134) als Langloch ausgebildet ist, vorzugsweise ausgerichtet in vertikaler Richtung,
**gekennzeichnet durch** folgende Schritte:
- Lockern der Befestigungsschrauben (134) und damit der Halteeinrichtung (130) von der Rückwand (112);
- Verschieben der Halteeinrichtung mit der oder ohne die Funktionseinrichtung (120) in Richtung der Längsausrichtung des Langlochs auf eine gewünschte Position, beispielsweise in vertikaler Richtung; und
- Festziehen der Befestigungsschrauben (134) und damit Arretieren der Halteeinrichtung (130) in der gewünschten Position an der Rückwand (112).

## Claims

1. A module (100), comprising:
a housing (110) for fastening in particular to a fork carriage (210) of an industrial truck (200); and
at least one holding device (130) arranged within the housing (110) for holding at least one functional unit (120) ;
wherein an opening (118) is provided in the back wall (112) of the housing (110), through which the functional unit communicates with the environment;
wherein at least one hole (115) is provided in the back wall (112) of the housing (110) for guiding at least one fastening screw (134) therethrough;
wherein the holding device (130) can be screwed to the back wall (112) inside the housing by means of the at least one fastening screw (134) that is guided through the hole; and
wherein at least one adjustment screw (132) is screwed into the holding device (130) on the side thereof facing the back wall of the housing, via which adjustment screw the holding device is supported against the back wall (112) of the housing when the holding device is screwed to the back wall of the housing with the fastening screws;
**characterized in**
**that** the hole (115) is formed as an elongated hole, preferably aligned in the vertical direction; and
in that the head of the adjusting screw (132) is wider than the clear width of the elongated hole; and
in that a threaded hole for the adjusting screw (132) is provided on the holding device (130) next to a threaded hole for the fastening screw (134) in such a manner that the adjusting screw, when screwed into its threaded hole, is supported over the elongated hole (115) on the back wall of the housing when the fastening screw (134), guided through the elongated hole, is screwed into its threaded hole.

2. The module (100) according to claim 1,
**characterized in**
**that** the holding device (130) is fastened to the back wall (112) of the housing (110) by means of a plurality of, preferably four, fastening screws (134); and/or
in that the holding device (130) is supported against the back wall (112) of the housing (110) by means of a plurality of, preferably four, adjusting screws (132).

3. The module (100) according to any one of the preceding claims, **characterized in**
**that** the holding device (130) has a receiving space (135) extending in the y-direction for receiving the functional unit (120); and
in that at least the edge or the wall of the receiving space (135), as part of the holding device, is made of an elastic material, preferably including a compression joint (136), for clamping the functional unit (120) in a desired rotational angle position (β) about the y-axis in the receiving space (135) when a force acts on the edge or wall of the receiving space; and/or
in that the holding device (130) has a receiving space (135) extending in the z-direction for receiving the functional unit (120); and
in that at least the edge or wall of the receiving space (135), as part of the holding device, is made of an elastic material, preferably including a compression joint (136), for clamping the functional unit (120) in a desired rotational angle position (γ) about the z-axis in the receiving space (135) when a force acts on the edge or wall of the receiving space.

4. The module according to claim 3, **characterized in**
**that** the elastic edge or wall of the receiving space (135) projects below a basic level (137) of the holding device (130) when the holding device is in its relaxed state.

5. The module (100) according to any one of the preceding claims, **characterized in**
**that** a plurality of holes (115) for the fastening screws (134) is provided distributed in the back wall (112) of the housing (110) for positioning the holding device at different locations within the housing.

6. The module (100) according to any one of the preceding claims, **characterized in**
**that** the functional unit (120) is a functional optical device that communicates with the environment of the housing via electromagnetic radiation, in particular light, through an opening (118) in the housing (110);
in that the optical device is, for example, a light source, in particular a laser light source, for emitting a light beam, a camera, and/or a sensor, for example a motion sensor or a distance sensor; and
in that the functional unit is preferably assigned a radio module (125, 125') having a transmitting and/or receiving unit for preferably bidirectional communication, for example via Bluetooth, ZigBee, or WiFi, for example between the module and a driver's cab (240) of the industrial truck (200).

7. The module (100) according to claim 6, **characterized in**
**that** the laser light source is configured as a line laser for emitting the laser light as a preferably horizontal line that is visible when projected onto an object; or
in that the laser light source is configured as a cross laser for emitting the laser light as a preferably horizontal line in combination with a cross line perpendicular thereto that are visible when projected onto an object.

8. The module (100) according to any one of the preceding claims, **characterized in**
**that** a power supply unit (140) is arranged in the housing for providing an electrical supply voltage, in particular to the functional unit (130); and
in that the power supply unit (140) is configured either in the form of an accumulator or in the form of a tap for an external supply voltage, for example the supply voltage of the industrial truck.

9. The module according to any one of the preceding claims, **characterized in**
**that** the holding device is made of an elastic material, at least in the region of the threaded holes for the fastening screws (134) and/or the threaded holes for the adjusting screws (132).

10. A fork carriage (210) for fork arms (220) of an industrial truck (200), **characterized by**
a module (100) according to any one of the preceding claims, which can be fastened to the fork carriage (210).

11. The fork carriage (210) according to claim 10, **characterized in that**
two fork arms are attached to the fork carriage (210); and
**in that** the module is preferably arranged centrally between the two fork arms (220).

12. The fork carriage (210) according to claim 10 or 11, **characterized in**
**that** the module (100) is horizontally displaceable along the x-axis on the fork carriage (210) and is lockable.

13. An industrial truck (200), in particular a forklift truck, **characterized by**
a fork carriage (210) according to any one of claims 10 to 12.

14. The industrial truck (200) according to claim 13, **characterized in**
**that** the industrial truck (200) has a driver's cab (240) for driving the industrial truck by an operator; and
in that a monitor (244) is provided in the driver's cab (240) for displaying the images captured by the camera (120) to the operator.

15. A method for aligning the holding device (130) on the back wall (112) of the housing (110) in a module according to any one of claims 1 to 9,
wherein holes (115) for guiding the fastening screws (134) through the back wall (112) of the housing (110) are provided, wherein the holding device (130) can be firmly screwed to the back wall (112) by means of the fastening screws (134), and wherein the holding device (130) is supported against the back wall from the inside by at least one adjusting screw (132),
**characterized by** the following steps for adjusting the angle of inclination (α) relative to the z-axis and/or the angle of rotation (β) about the y-axis:
loosening the fastening screws (134) and thus the holding device (130), with or without the functional unit (120), from the back wall (112) of the housing (110);
turning at least one of the adjusting screws (132) such that the holding device is inclined relative to the back wall (112) of the housing (110) in accordance with the desired angle of inclination (α) and/or angle of rotation (β); and
tightening the fastening screws (134) and thus locking the holding device (130) in the inclined and/or rotated position relative to the back wall (112).

16. The method according to claim 15, **characterized in**
**that** turning the adjusting screws (132) is carried out by means of a screwdriver from outside the housing (110) through the holes (115).

17. The method according to claim 15 or 16,
wherein the holding device (130) has a receiving space (135) for receiving the functional unit (120), wherein at least the edge or wall of the receiving space (135), as part of the holding device, is made of an elastic material, preferably including a compression joint (136) for clamping the functional unit (120) in a desired rotational angle position (β) about the y-axis in the receiving space (135) when the latter extends in the y-direction, or in a desired rotational angle position (γ) when the receiving space (135) extends in the z-direction,
**characterized by** the following steps:
- loosening the fastening screws and thus the holding device with the functional unit (120) from the back wall (112) so that the elastic edge or wall of the receiving space (135), in a relaxed state, extends below the base level (137) of the holding device (130), thereby widening the receiving space (135) and making the functional unit (120) movable in the receiving space;
- rotating the functional unit (120) in the receiving space (135) to the desired rotational angle position (β) about the y-axis, or to the desired rotational angle position (γ) about the z-axis; and
- tightening the fastening screws and thus pressing the edge or wall of the receiving space (135) against the back wall (112) under the action of force, whereby the functional unit (120) is clamped in the receiving space of the holding device in a rotationally fixed manner in the desired rotational angle position (β, γ).

18. The method according to any one of claims 15 to 17, **characterized in**
**that** the at least one hole (115) for the fastening screws (134) is formed as an elongated hole, preferably aligned in the vertical direction,
**characterized by** the following steps:
- loosening the fastening screws (134) and thus the holding device (130) from the back wall (112);
- moving the holding device, with or without the functional device (120), in the direction of the longitudinal alignment of the elongated hole to a desired position, for example in the vertical direction; and
- tightening the fastening screws (134) and thus locking the holding device (130) in the desired position on the back wall (112).

## Revendications

1. Module(100) comportant :
un boîtier (110) pour la fixation en particulier sur un porte-fourche (210) d'un véhicule de manutention (200), et
au moins un système de maintien (130) disposé à l'intérieur du boîtier (110) pour maintenir au moins une unité fonctionnelle (120),
sachant que dans la paroi arrière (112) du boîtier (110) est prévue une ouverture (118) à travers laquelle l'unité fonctionnelle communique avec l'environnement,
sachant que dans la paroi arrière (112) du boîtier (110) au moins un trou (115) est prévu pour le passage d'au moins une vis de fixation (134),
sachant que le système de maintien (130) peut être fermement vissé à l'intérieur du boîtier sur la paroi arrière (112) à l'aide d'au moins une vis de fixation (134), qui est passée à travers l'trou, et
sachant que dans le système de maintien (130) sur son côté tourné vers la paroi arrière du boîtier au moins une vis d'ajustage (132) est vissée, par le biais de laquelle le système de maintien est soutenu contre la paroi arrière (112) du boîtier, lorsque le système de maintien est vissé avec les vis de fixation sur la paroi arrière du boîtier,
**caractérisé en ce que**
le trou (115) est constitué sous la forme d'un trou oblong, de préférence orienté en direction verticale, et
**en ce que** la tête de la vis d'ajustage (132) est plus large que la largeur libre du trou oblong, et
**en ce qu'**un trou fileté pour la vis d'ajustage (132) sur le système de maintien (130) est aménagé près d'un trou fileté pour la vis de fixation (134) de telle manière que la vis d'ajustage, vissée dans son trou fileté, s'appuie par le trou oblong (115) sur la paroi arrière du boîtier, lorsque la vis de fixation (134), passée par le trou oblong, est vissée dans son trou fileté.

2. Module (100) selon la revendication 1,
**caractérisé en ce que**
le système de maintien (130) est fixé sur la paroi arrière (112) du boîtier (110) à l'aide d'une pluralité, de préférence de quatre vis de fixation (134), et/ou
**en ce que** le système de maintien (130) est soutenu contre la paroi arrière (112) du boîtier (110) à l'aide d'une pluralité de vis d'ajustage (132), de préférence quatre.

3. Module (100) selon l'une quelconque des revendications précédentes,
**caractérisé en ce que**
le système de maintien (130) comporte un espace de réception (135) s'étendant en direction y pour recevoir l'unité fonctionnelle (120), et
**en ce qu'**au moins le bord ou la cloison de l'espace de réception (135) est fabriqué en tant que partie du système de maintien dans un matériau élastique, de préférence avec un joint de compression (136) pour serrer l'unité fonctionnelle (120) dans une position angulaire de rotation souhaitée (β) autour de l'axe y dans l'espace de réception (135) sous l'effet d'une force sur le bord ou la cloison de l'espace de réception, et/ou
**en ce que** le système de maintien (130) comporte un espace de réception (135) s'étendant en direction z pour recevoir l'unité fonctionnelle (120), et
**en ce qu'**au moins le bord ou la cloison de l'espace de réception (135) sont fabriqués en tant que partie du système de maintien dans un matériau élastique, de préférence avec un joint de compression (136) pour serrer l'unité fonctionnelle (120) dans une position d'angle de rotation souhaitée (γ) autour de l'axe z dans l'espace de réception (135) sous l'effet d'une force sur le bord ou sur la cloison de l'espace de réception.

4. Module selon la revendication 3,
**caractérisé en ce que**
le bord élastique ou la paroi élastique de l'espace de réception (135) à l'état serré du système de maintien dépasse sous un niveau de base (137) du système de maintien (130).

5. Module (100) selon l'une quelconque des revendications précédentes,
**caractérisé en ce que**
dans la paroi arrière (112) du boîtier (110) une pluralité de trous (115) est prévue répartis pour les vis de fixation (134) pour positionner le système de maintien à différents emplacements à l'intérieur du boîtier.

6. Module (100) selon l'une quelconque des revendications précédentes,
**caractérisé en ce que**
concernant l'unité fonctionnelle (120), il s'agit d'un système fonctionnel optique, qui communique par le biais d'un faisceau électromagnétique, en particulier de la lumière, à travers une ouverture (118) dans le boîtier (110), avec l'environnement du boîtier,
**en ce que** concernant le système optique par exemple, il s'agit d'une source lumineuse, en particulier une source lumineuse au laser pour l'émission d'un faisceau lumineux, d'une caméra et/ou d'un détecteur, par exemple d'un capteur de mouvement ou d'un détecteur de distance, et
**en ce qu'**un module radio (125, 125') est attribué de préférence à l'unité fonctionnelle avec une unité d'émission et/ou de réception pour une communication de préférence bidirectionnelle, par exemple par système Bluetooth, ZigBee ou WiFi, par exemple entre le module et un poste de conducteur (240) du véhicule de manutention (200).

7. Module (100) selon la revendication 6,
**caractérisé en ce que**
la source lumineuse au laser est constituée sous la forme d'un laser linéaire pour émettre de la lumière à laser en tant que ligne de préférence horizontale, identifiable lors de la projection sur un objet, ou
**en ce que** la source lumineuse au laser est constituée sous la forme d'un laser croisé pour émettre de la lumière à laser en tant que ligne de préférence horizontale en combinaison avec une ligne croisée perpendiculaire, identifiable à cet effet lors de la projection sur un objet.

8. Module (100) selon l'une quelconque des revendications précédentes,
**caractérisé en ce qu'**
une unité d'alimentation en tension (140) est disposée dans le boîtier pour fournir une tension d'alimentation électrique, en particulier pour l'unité fonctionnelle (130), et
**en ce que** l'unité d'alimentation en tension (140) est constituée soit sous la forme d'un accumulateur, soit sous la forme d'une prise pour une tension d'alimentation externe, par exemple la tension d'alimentation du véhicule de manutention.

9. Module selon l'une quelconque des revendications précédentes,
**caractérisé en ce que**
le système de maintien est fabriqué dans un matériau élastique au moins dans la zone des trous filetés pour les vis de fixation (134) et/ou des trous filetés pour les vis d'ajustage (132).

10. Porte-fourche (210) pour bras de fourche (220) d'un véhicule de manutention (200),
**caractérisé par**
un module (100) pouvant être fixé sur le porte-fourche (210) selon l'une quelconque des revendications précédentes.

11. Porte-fourche (210) selon la revendication 10,
**caractérisé en ce que**
deux bras de fourche sont montés sur le porte-fourche (210), et **en ce que** le module est disposé de préférence au centre entre les deux bras de fourche (220).

12. Porte-fourche (210) selon la revendication 10 ou 11,
**caractérisé en ce que**
le module (100) est déplacé et est bloqué sur le porte-fourche (210) horizontalement en direction x.

13. Véhicule de manutention (200), en particulier chariot élévateur à fourche,
**caractérisé par**
un porte-fourche (210) selon l'une quelconque des revendications 10 à 12.

14. Véhicule de manutention (200) selon la revendication 13,
**caractérisé en ce que**
le véhicule de manutention (200) comporte un poste de conducteur (240) pour la conduite du véhicule de manutention par un opérateur, et
**en ce qu'**un écran de contrôle (244) est présent dans le poste de conducteur (240) pour afficher les images enregistrées par la caméra (120) pour l'opérateur.

15. Procédé d'orientation du système de maintien (130) sur la paroi arrière (112) du boîtier (110) dans un module selon l'une quelconque des revendications 1 à 9,
sachant que des trous (115) sont prévus dans la paroi arrière (112) du boîtier (110) pour passer les vis de fixation (134), sachant que le système de maintien (130) peut être fermement vissé à la paroi arrière (112) à l'aide des vis de fixation (134) et sachant que le système de maintien (130) est soutenu de l'intérieur contre la paroi arrière avec au moins une vis d'ajustage (132),
**caractérisé par** les étapes suivantes pour le réglage de l'angle d'inclinaison (α) par rapport à l'axe z et/ou à l'angle de rotation (β) autour de l'axe y,
desserrage des vis de fixation (134) et de ce fait du système de maintien (130), avec ou sans l'unité fonctionnelle (120), de la paroi arrière (112) du boîtier (110),
rotation d'au moins une des vis d'ajustage (132) de telle manière que le système de maintien est incliné conformément à l'angle d'inclinaison (α) souhaité et/ou à l'angle de rotation (β) par rapport à la paroi arrière (112) du boîtier (110), et
serrage des vis de fixation (134) et de ce fait blocage du système de maintien (130) dans la position inclinée et/ou tournée par rapport à la paroi arrière (112).

16. Procédé selon la revendication 15,
**caractérisé en ce que** la rotation des vis d'ajustage (132) à l'aide d'un tournevis en dehors du boîtier (110) a lieu à travers les trous (115).

17. Procédé selon la revendication 15 ou 16,
sachant que le système de maintien (130) comporte un espace de réception (135) pour recevoir l'unité fonctionnelle (120), sachant qu'au moins le bord ou la cloison de l'espace de réception (135) est fabriqué en tant que partie du système de maintien dans un matériau élastique, de préférence avec un joint de compression (136) pour serrer l'unité fonctionnelle (120) dans une position angulaire de rotation souhaitée (β) autour de l'axe y dans l'espace de réception (135), lorsque celui-ci s'étend en direction y, ou dans une position angulaire de rotation (γ) , lorsque l'espace de réception (135) s'étend en direction z,
**caractérisé par** les étapes suivantes :
- desserrage des vis de fixation et de ce fait du système de maintien avec le système fonctionnel (120) de la paroi arrière (112) de telle manière que le bord élastique ou la cloison élastique de l'espace de réception (135) à l'état serré s'étend en dessous du niveau de base (137) du système de maintien (130), l'espace de réception (135) étant de ce fait élargi et l'unité fonctionnelle (120) pouvant être déplacée dans l'espace de réception,
- rotation de l'unité fonctionnelle (120) dans l'espace de réception (135) dans la position angulaire de rotation (β) souhaitée autour de l'axe y ou dans la position angulaire de rotation (γ) souhaitée autour de l'axe z, et
- serrage des vis de fixation et de ce fait compression du bord ou de la cloison de l'espace de réception (135) sous un effet de force contre la paroi arrière (112), l'unité fonctionnelle (120) étant de ce fait serrée bloquée en rotation dans la position angulaire de rotation (β,γ) souhaitée dans l'espace de réception du système de maintien.

18. Procédé selon l'une quelconque des revendications 15 à 17,
**caractérisé en ce qu'**
au moins un trou (115) pour les vis de fixation (134) est constitué sous la forme d'un trou oblong, de préférence orienté en direction verticale,
**caractérisé par** les étapes suivantes :
- desserrage des vis de fixation (134) et de ce fait du système de maintien (130) de la paroi arrière (112),
- déplacement du système de maintien avec ou sans le système fonctionnel (120) en direction de l'orientation longitudinale du trou oblong à une position souhaitée, par exemple en direction verticale, et
- serrage des vis de fixation (134) et de ce fait blocage du système de maintien (130) dans la position souhaitée sur la paroi arrière (112).
